# EUROPEAN PATENT APPLICATION

(11) **EP 3 833 104 A1**
(43) Date of publication of application: **09.06.2021**
(21) Application number: 19854662.4
(22) Date of filing: 19.08.2019
(51) Int. Cl.: H04W 36/14

(54) **UI DISPLAY METHOD AND APPARATUS AND TERMINAL DEVICE**

(30) Priority: 29.08.2018 CN 201810997730
(71) Applicant: GUANGDONG OPPO MOBILE TELECOMMUNICATIONS CORP., LTD., Dongguan Guangdong 523860 (CN)
(72) Inventor: XIA, Yang, Dongguan, Guangdong 523860 (CN); ZHANG, Tao, Dongguan, Guangdong 523860 (CN); TANG, Kai, Dongguan, Guangdong 523860 (CN)
(74) Representative: Mewburn Ellis LLP
(86) International application number: PCT/CN2019/101394
(87) International publication number: WO 2020/042956

(57) **Abstract**

A method and device for displaying a user interface (UI), and a terminal device are provided. The method includes the following. A first network coverage quality of a first access network and a second network coverage quality of a second access network are determined. Based on the first network coverage quality and the second network coverage quality, first prompt information for the first access network or second prompt information for the second access network is displayed on the UI.

## Description

### CROSS-REFERENCE TO RELATED APPLICATION(S)

This application claims priority to Chinese Patent Application No. 201810997730.1, filed on August 29, 2018, which is incorporated herein by reference as if reproduced in its entirety.

### TECHNICAL FIELD

This disclosure relates to the technical field of mobile communication, and particularly to a method and device for displaying a user interface (UI), and a terminal device.

### BACKGROUND

With the development of mobile communication networks, the mobile communication network has gradually evolved from a fourth generation (4G) mobile communication network to a fifth generation (5G) mobile communication network. During evolution of the mobile communication network, evolution of a radio access network (RAN) and a core network (CN) as well as evolution of a terminal are independent of each other. In the case that 5G core network technologies and 5G terminal technologies are not mature enough, data transmission needs to rely on a 4G core network, and the terminal can access the 4G core network through a 4G access network and a 5G access network. This network architecture belongs to a non-stand alone (NSA) architecture.

Since there are two types of access networks in the NSA architecture, for the terminal device, how to determine the type of an access network currently connected and accurately displays the type of the access network for a current service through a user interface (UI) of the terminal device has become a problem to be solved.

### SUMMARY

According to implementations of the disclosure, a method and device for displaying a user interface (UI), and a terminal device are provided.

Technical solutions of the disclosure include the following.

In implementations of the disclosure, a method for displaying a UI is provided. A first network coverage quality of a first access network and a second network coverage quality of a second access network are determined. Based on the first network coverage quality and the second network coverage quality, first prompt information for the first access network or second prompt information for the second access network are displayed on the UI.

In implementations of the disclosure, a device for displaying a UI is provided. The device inceludes a determining module and a display module. The determining module is configured to determine a first network coverage quality of a first access network and a second network coverage quality of a second access network. The display module is configured to display, based on the first network coverage quality and the second network coverage quality, first prompt information for the first access network or second prompt information for the second access network on the UI.

In implementations of the disclosure, a terminal device is provided. The terminal device includes a processor and a memory. The memory stores a computer program. The processor is configured to call and run the computer program stored in the memory and configured to execute the above method for displaying a UI.

In implementations of the disclosure, a chip is provided. The chip is configured to execute the above method for displaying a UI. The chip includes a processor configured to call and run a computer program from a memory. The computer program is operable with a device equipped with the chip to execute the above method for displaying a UI.

In implementations of the disclosure, a computer-readable storage medium is provided. The computer-readable storage medium stores a computer program which is operable with a computer to execute the above method for displaying a UI.

In implementations of the disclosure, a computer program product is provided. The computer program product includes a computer program instruction which is operable with a computer to execute the above method for displaying a UI.

In implementations of the disclosure, a computer program is provided. The computer program, when executed by a computer, is operable with the computer to execute the above method for displaying a UI.

According to the method and device for displaying a UI and the terminal device of the implementations of the disclosure, based on the first network coverage quality of the first access network and the second network coverage quality of the second access network, the first prompt information for the first access network or the second prompt information for the second access network is displayed. In this way, the type of an access network currently connected by the terminal device can be displayed correctly.

### BRIEF DESCRIPTION OF THE DRAWINGS

FIG. 1 is a schematic diagram illustrating a communication system architecture according to implementations.
FIG. 2 is a schematic diagram illustrating an Option 3a architecture according to implementations.
FIG. 3 is a schematic diagram illustrating a non-stand alone (NSA) architecture according to implementations.
FIG. 4 is a schematic flowchart illustrating a method for displaying a user interface (UI) according to implementations.
FIG. 5(a) is a schematic diagram illustrating a UI according to implementations.
FIG. 5(b) is a schematic diagram illustrating another UI according to implementations.
FIG. 6 is a schematic diagram illustrating connections between a core network and a first access network as well as a second access network according to implementations.
FIG. 7 is a schematic structural diagram illustrating a device for displaying a UI according to implementations.
FIG. 8 is a schematic structural diagram illustrating a communication device according to implementations.
FIG. 9 is a schematic structural diagram illustrating a chip according to implementations.
FIG. 10 is a schematic block diagram illustrating a communication system according to implementations.

### DETAILED DESCRIPTION

Technical solutions of implementations of the disclosure will be described with reference to accompanying drawings in the implementations. Apparently, implementations described hereinafter are merely some implementations, rather than all implementations of the disclosure. All other implementations obtained by those of ordinary skill in the art based on the implementations without creative efforts shall fall within the protection scope of the disclosure.

The technical solutions of the implementations are applicable to various communication systems, such as a global system of mobile communication (GSM), a code division multiple access (CDMA) system, and a wideband code division multiple access (WCDMA) system, a general packet radio service (GPRS) system, a long term evolution (LTE) system, an LTE frequency division duplex (FDD) system, an LTE time division duplex (TDD) system, a universal mobile telecommunication system (UMTS), a worldwide interoperability for microwave access (WiMAX) communication system or fifth generation (5G) system, and so on.

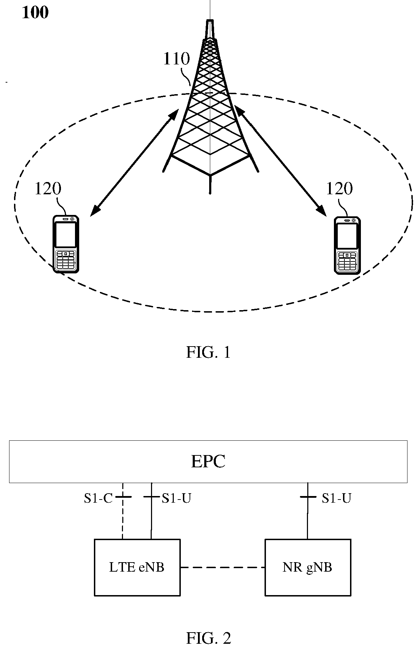

FIG. 1 exemplarily illustrates a communication system 100 of implementations of the disclosure. As illustrated in FIG. 1, the communication system 100 includes a network device 110. The network device 110 may be a device that communicates with a terminal device 120 (also known as a communication terminal device or terminal equipment). The network device 110 can provide communication coverage for a geographic region, and can communicate with a terminal device(s) within the coverage (i.e., a coverage area) of the network device. In some implementations, the network device 110 may be a base transceiver station (BTS) in a GSM system or a CDMA system, or a NodeB (NB) in a WCDMA system, or an evolutional Node B (eNB or eNodeB) in an LTE system, or a wireless controller in a cloud radio access network (CRAN), or the network device can be a mobile switching center, a relay station, an access point, an on-board device, a wearable device, a hub, a switch, a bridge, a router, a network side device in a 5G network, or a network device in the future public land mobile network (PLMN), etc.

The communication system 100 further includes at least one terminal device 120 within the coverage of the network device 110. The "terminal device" referred to herein includes, but is not limited to, a device configured to communicate via a wired line, another data connection/network, a wireless interface, a device which is part of another terminal device and configured to receive/transmit communication signals, and/or an Internet of things (IoT) equipment. Examples of the wired line may include, but are not limited to, a public switched telephone network (PSTN), a digital subscriber line (DSL), a digital cable, and a direct connection cable. Examples of the wireless interface may include, but are not limited to, a wireless interface for a cellular network, a wireless local area network (WLAN), a digital television network (e.g., a digital video broadcasting-handheld (DVB-H) network), a satellite network, an amplitude modulation-frequency modulation (AM-FM) broadcast transmitter. A terminal device configured to communicate via a wireless interface may be referred to as a "wireless communication terminal device", a "wireless terminal device", or a "mobile terminal device". Examples of the mobile terminal device may include, but are not limited to, a satellite telephone or cellular telephone, a personal communication system (PCS) terminal device integrated with functions of a cellular radio telephone, data processing, fax, and/or data communication, a personal digital assistant (PDA) equipped with a radio telephone, a pager, Internet/Intranet access, a web browser, a memo pad, calendar, and/or a global positioning system (GPS) receiver, and/or a conventional laptop, a handheld receiver, or other electronic devices equipped with a radio telephone transceiver. The terminal device may refer to an access terminal equipment, a user equipment (UE), a subscriber unit, a subscriber station, a mobile station, a remote station, a remote terminal equipment, a mobile equipment, a user terminal equipment, a terminal equipment, a wireless communication equipment, a user agent, or a user device. The access terminal equipment may be a cellular radio telephone, a cordless telephone, a session initiation protocol (SIP) telephone, a wireless local loop (WLL) station, a PDA, a handheld device with wireless communication functions, a computing device or other processing devices connected with a wireless modem, an on-board device, a wearable device, a terminal device in a 5G network or a terminal device in the future PLMN, etc.

In one implementation, device to device (D2D) communication can be performed between the terminal devices 120.

In one implementation, the 5G system or the 5G network may also be referred to as a new radio (NR) system or NR network.

FIG. 1 exemplarily illustrates a network device and two terminal devices. In one implementation, the communication system 100 includes multiple network devices, and other number of terminal devices may be within the coverage of each of the multiple network devices, which is not limited in the disclosure.

In one implementation, the communication system 100 further includes other network entities such as a network controller and a mobility management entity, which is not limited in the disclosure.

A device having communication functions in a network/system may be referred to as a communication device. Taking the communication system 100 illustrated in FIG. 1 as an example, the communication device may be a terminal device 120 or a network device 110 having communication functions. The network device 110 and the terminal device 120 may be the devices described above, which will not be repeated herein. The communication device may also be other devices in the communication system 100, such as a network controller, a mobility management entity, and other network entities, which is not limited in the disclosure.

The terms "system" and "network" herein can be used interchangeably. The term "and/or" herein refers to an association relationship for describing associated objects, which means that there can be three kinds of relationships. For example, "A and/or B" means that: A alone, both A and *B* exist, *B* alone. In addition, the character "/" herein generally indicates that associated objects before and after the character "/" are in an "or" relationship.

For easy understanding of the technical solutions, related technologies will be described below.

Option 3a architecture: the characteristics of the Option 3a architecture are that the core network is a fourth generation (4G) core network, that is, an evolved packet core (EPC), and the access network has LTE functions and NR functions. In terms of interaction between a terminal device and a base station, control plane signaling is transferred through an LTE base station; user plane data of the terminal device is distributed at the terminal device and then transmitted to the core network through the LTE and the NR independently.

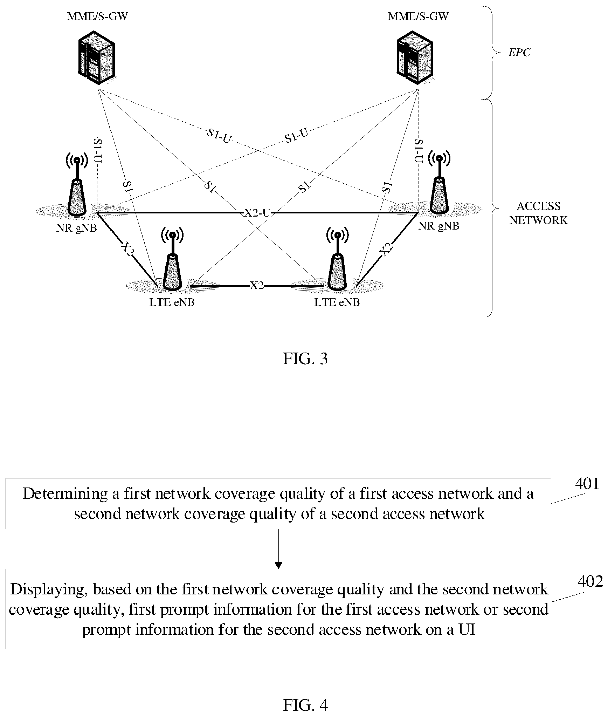

The Option 3a architecture belongs to a non-stand alone (NSA) architecture. For the Option 3a architecture, as illustrated in FIG. 2 and FIG. 3, the access network includes two parts: a 4G access network and a 5G access network. A network element of the 4G access network is an LTE eNB (e.g., a 4G base station), and a network element of the 5G access network is an NR gNB (e.g., a 5G base station). The core network of the Option 3a architecture is a 4G core network, that is, EPC. The LTE eNB serves as a master node (MN) in dual connectivity (DC), and the NR gNB serves as a secondary node (SN) in DC. Interfaces between the LTE eNB and the EPC are S1 interfaces, which include control plane interfaces (e.g., S1-C interfaces) and user plane interfaces (e.g., S1-U interfaces). Only user plane interfaces (e.g., S1-U interfaces) exist between the NR gNB and the EPC. EUTRA-NR dual connectivity (ENDC) related processes between the LTE eNB and the NR gNB are performed via X2 interfaces (including X2-C interfaces and X2-U interfaces).

In implementations of the disclosure, for realization of enhance mobile broadband (eMBB) functions in 5G, both the NR access network and the LTE access network can be distribution paths of data. Since EPC is a 4G core network, the network configuration and indicators thereof cannot fully meet 5G requirements. However, with the evolution of LTE technologies and the improvement of EPC capabilities, some EPC indicators will satisfy or basically satisfy 5G technical indicators specified in the 3rd Generation Partnership Project (3GPP).

In this process, UI display of access technologies on the terminal device should truly reflect user scenarios and a current network state of the terminal device.

As an example, when a UE has attached to an LTE eNB and an NR gNB and is in a service mode, UE→NR gNB→EPC is a complete link when the UE is in a static state. Since a bandwidth of the link (new radio and an interface of the core network) is much larger than a bandwidth of UE→LTE eNB→EPC, when radio resources of the two links both meet desired requirements, for the UE, the NR link is preferred.

Implementations of the disclosure provide a method for displaying a UI. As illustrated in FIG. 4, the method begins at block 401.

At block 401, a first network coverage quality of a first access network and a second network coverage quality of a second access network are determined.

At block 402, based on the first network coverage quality and the second network coverage quality, first prompt information for the first access network or second prompt information for the second access network is displayed on the UI.

The technical solutions of the implementations of the disclosure are applicable to a terminal device. The terminal device herein may be any mobile device capable of communicating with the network, such as a mobile phone, a tablet computer, an on-board terminal, and a notebook.

In some implementations, the first access network is different from the second access network. The first access network may differ from the second access network in at least one of the following aspects: the first access network and the second access network comply with different communication protocols; the first access network and the second access network use different access network elements; and the first access network and the second access network are mobile communication networks of different generations.

In some implementations, the first access network is a 5G access network, and the second access network is a 4G access network; or, the first access network is an NR access network, and the second access network is an LTE access network.

In other implementations, the first access network is a third generation (3G) access network, and the second access network is a 4G access network.

The above are examples of the first access network and the second access network, and implementations are not limited to the above examples.

The first network coverage quality and the second network coverage quality can be collectively referred to as network coverage quality, which can be expressed as various indicators for indicating the strength of a wireless signal. For example, the network coverage quality can be characterized by reference signal receiving power (RSRP), or characterized by a signal to interference plus noise ratio (SINR) of a reference signal.

In some implementations, the operations at block 401 include the following. A first network coverage quality corresponding to the first access network and a second network coverage quality corresponding to the second access network are determined respectively. For example, the terminal device detects a network coverage quality of the first access network to obtain the first network coverage quality, and detects a network coverage quality of the second access network to obtain the second network coverage quality. The terminal device can detect the network coverage quality in various manners. For example, the terminal device receives a signal through a wireless antenna, and determines through signal analysis (e.g., coherence analysis) that a signal quality indicator such as signal strength is good, where the signal quality indicator is the first network coverage quality and the second network coverage quality.

In some implementations, when the first access network and the second access network provide coverage together, that is, a geographic space is covered by both the first access network and the second access network, the terminal device detects a signal quality of a first access network device to obtain the first network coverage quality, and detects a signal quality of a second access network device to obtain the second network coverage quality.

The first prompt information and the second prompt information may have various contents, such us text information (e.g., text about the first access network and the second access network) and icon. In the case that a 5G access network is used as the first access network and a 4G access network is used as the second access network, displaying a first network identifier or a second network identifier includes: displaying text "5G" or text "4G"; or, displaying an icon of 5G or an icon of 4G. In the case that an NR access network is used as the first access network and an LTE access network is used as the second access network, displaying the first network identifier or the second network identifier includes: displaying text "NR" or text "LTE"; or, displaying an icon of NR or an icon of LTE.

The first prompt information and the second prompt information may be in various forms, and implementations are not limited to any of the foregoing forms.

The first prompt information and the second prompt information may be displayed in a floating display manner or on a predetermined page. If the first prompt information and the second prompt information are displayed in the floating display manner, when a background interface for displaying the first prompt information or the second prompt information is switched, the first prompt information or the second prompt information will remain displayed. If the first prompt information and the second prompt information are displayed on a predetermined interface, when the predetermined interface is switched to another interface, the first prompt information and the second prompt information will be hidden.

In some implementations, the operations at block 402 include the following. The first prompt information or the second prompt information is displayed on a predetermined page in a floating display manner. As an example, the first prompt information or the second prompt information is displayed on a predetermined UI of the terminal device in the floating display manner. The predetermined UI may include any interface where the above prompt information is displayed, for example, a desktop, an application interface of an application. In some implementations, the predetermined UI may be a system interface of an operating system or a non-full-screen UI interface of an application. The non-full-screen UI interface may be an interface other than a full-screen UI interface, and the full-screen UI interface may be a full-screen playback interface of a video application.

The first prompt information and the second prompt information may correspond to a same display position. If the first prompt information is displayed in the display position, the second prompt information will be hidden. Similarly, if the second prompt information is displayed in the display position, the first prompt information will be hidden. In this way, the first prompt information and the second prompt information share one display position, which reduces occupation of the display position.

In some implementations, the first prompt information and the second prompt information can be displayed in a predetermined position of the display of the terminal device, and the predetermined position is related to a display mode of the terminal device.

The display mode of the terminal device may include a portrait displaying mode and a landscape displaying mode.

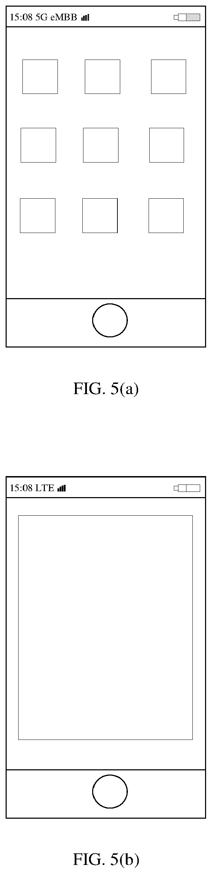

In the portrait displaying mode, a short side of a display screen of the terminal device is parallel to or approximately parallel to a preset plane, and a long side of the display screen is perpendicular to the short side. The preset plane may be the ground or a support surface such as a table top. FIG. 5(a) and FIG. 5(b) are display schematic diagrams illustrating the terminal device in the portrait displaying mode.

In the portrait displaying mode, the long side of the display screen of the terminal device is parallel to or approximately parallel to the preset plane, and the short side is perpendicular to the long side. The preset plane may be the ground or a support surface such as a table top. The length of the long side is greater than that of the short side.

If the terminal device is in the portrait displaying mode, the predetermined position may be the top of the display screen away from the preset plane, or one side of the display screen parallel to the long side. If the terminal device is in the landscape displaying mode, the predetermined position may be the top of the display screen away from the preset plane, or one side of the display screen parallel to the short side.

In some implementations, the operations of displaying the first prompt information or the second prompt information on the UI at block 402 include at least one of: displaying on the UI a first network identifier of the first access network or a second network identifier of the second access network; displaying on the UI first quality-grade information of the first network coverage quality of the first access network or second quality-grade information of the second network coverage quality of the second access network.

For example, the first access network is a 5G access network and the second access network is a 4G access network. Displaying the first network identifier or the second network identifier includes: displaying text "5G" or text "4G"; or, displaying an icon of 5G or an icon of 4G.

For example, the first access network is an NR access network and the second access network is an LTE access network. Displaying the first network identifier or the second network identifier includes: displaying text "NR" or text "LTE"; or, displaying an icon of NR or an icon of LTE.

The first quality-grade information of the first network coverage quality of the first access network or the second quality-grade information of the second network coverage quality of the second access network can be displayed on the UI. Network coverage qualities can be classified into multiple grades, and the grades of network coverage qualities can be represented by different graphic objects in a set of icons.

In some implementations, the grades of network coverage qualities for the first access network and the second access network can be expressed in different manners.

The grades of network coverage qualities can be expressed in at least one of the following manners.

### First manner

The set of icons is composed of a set of columns with different lengths. As an example, the higher the grade of a network coverage quality, the larger the number of filled columns and/or the longer the length of the filled columns. On the other hand, the lower the grade of the network coverage quality, the larger the number of hollow (i.e., unfilled) columns and/or the longer the length of the hollow columns. As another example, the higher the grade of a network coverage quality, the larger the number of hollow columns and/or the longer the length of filled columns. On the other hand, the lower the grade of the network coverage quality, the larger the number of hollow columns and/or the longer the length of the hollow columns.

### Second manner

The set of icons is composed of a set of concentric arcs with same center angles and different radii. As an example, the higher the grade of the network coverage quality, the larger the number of filled arcs and/or the longer the arc length of the filled arcs. On the other hand, the lower the grade of the network coverage quality, the larger the number of hollow (i.e., unfilled) arcs and/or the longer the arc length of the hollow arcs. As another example, the higher the grade of a network coverage quality, the larger the number of hollow arcs and/or the longer the arc length of filled arcs. On the other hand, the lower the grade of the network coverage quality, the larger the number of hollow arcs and/or the longer the arc length of the hollow arcs.

### Third manner

The set of icons is composed of a set of concentric circles with different radii. As an example, the higher the grade of a network coverage quality, the larger the number of filled circles and/or the longer the circumference of the filled circles. On the other hand, the lower the grade of the network coverage quality, the larger the number of hollow (i.e., unfilled) circles and/or the longer the circumference of the hollow circles. As another example, the higher the grade of a network coverage quality, the larger the number of hollow circles and/or the longer the circumference of filled circles. On the other hand, the lower the grade of the network coverage quality, the larger the number of hollow circles and/or the longer the circumference of the hollow circles.

In some implementations, rather than displaying both the first prompt information and the second prompt information simultaneously, the first prompt information or the second prompt information is displayed on the UI based on the first network coverage quality and the second network coverage quality.

In some implementations, the operations at block 402 include the following. If a weighted average of the first network coverage quality and the second network coverage quality meets a first access standard, the first prompt information is displayed on the UI.

The weighted average of the first network coverage quality and the second network coverage quality may include the following. If a first weight corresponding to the first network coverage quality is equal to a second weight corresponding to the second network coverage quality, the weighted average of the first network coverage quality and the second network coverage quality is an arithmetic average of the first network coverage quality and the second network coverage quality.

If the first weight is not equal to the second weight, the weighted average of the first network coverage quality and the second network coverage quality is not equal to the arithmetic average.

In some implementations, the weighted average meets the first access standard as follows. The weighted average is greater than or equal to a quality threshold defined by the first access standard. If the weighted average is less than the quality threshold, the first access standard is not met.

If the weighted average meets the first access standard, at least the first prompt information is displayed on the UI. In other implementations, both the first prompt information and the second prompt information are displayed on the UI.

In some implementations, the relationship between the first weight and the second weight is not limited in the disclosure. If the first weight is less than the second weight, on condition that the weighted average meets the first access standard, the first network coverage quality of the first access network is good. In this case, only the first prompt information is displayed on the UI. For the terminal device, the first access network is preferred for data transmission.

In some implementations, the operations at block 402 include the following. If the weighted average of the first network coverage quality and the second network coverage quality meets the first access standard, the first prompt information is displayed on the UI. If the weighted average of the first network coverage quality and the second network coverage quality does not meet the first access standard, the second prompt information is displayed on the UI.

In some implementations, the operations at block 402 include the following. If the weighted average of the first network coverage quality and the second network coverage quality meets the first access standard, and the first network coverage quality meets a second access standard, the first prompt information is displayed on the UI.

In some implementations, the first network coverage quality meets the second access standard as follows. The first network coverage quality is greater than a second quality threshold corresponding to the second access standard; or, the first network coverage quality is greater than the second network coverage quality. The above are only examples for illustrating how the first network coverage quality meets the second access standard, and implementations are not limited to the foregoing examples.

In some implementations, a quality threshold corresponding to the second access standard is less than a quality threshold corresponding to the first access standard. In this way, when the terminal device displays only the first prompt information, it ensures that a network coverage quality of the first access network that the terminal device accesses is good enough to meet data transmission requirements of the terminal device. As such, it is possible to avoid displaying of the first prompt information where the weighted average meets the first access standard because the second network coverage quality is very good but the first network coverage quality is very poor, in other words, the terminal device basically uses the second access network to transmit data.

In some implementations, the weighted average of the first network coverage quality and the second network coverage quality meets the first access standard as follows. The weighted average of the first network coverage quality and the second network coverage quality is greater than the quality threshold corresponding to the first access standard.

In some implementations, the method further includes the following. Detect that a terminal device attaches the first access network and the second access network and establishes a connection with the first access network and the second access network. The operations at block 401 include the following. After the terminal device establishes the connection with the first access network and the second access network, the first network coverage quality and the second network coverage quality are determined.

When the terminal device is powered on and enters an environment where the first access network and the second access network provide coverage together, from an environment with no network coverage or poor network coverage, the terminal device attaches to the networks by sending an attachment request, etc. In this case, the operations at block 401 are executed to trigger execution of the operations at block 401 and block 402, so as to realize display or display switching of the first prompt information or the second prompt information.

In some implementations, a first link is established between the first access network and a core network, and a second link is established between the second access network and the core network.

In the implementation, the link between the first access network and the core network as well as the link between the second access network and the core network are established respectively, and the links can be used for data transmission and/or signaling transmission.

As an example, the first access network performs data transmission with the core network via the first link, and the second access network performs data and signaling transmission with the core network via the second link.

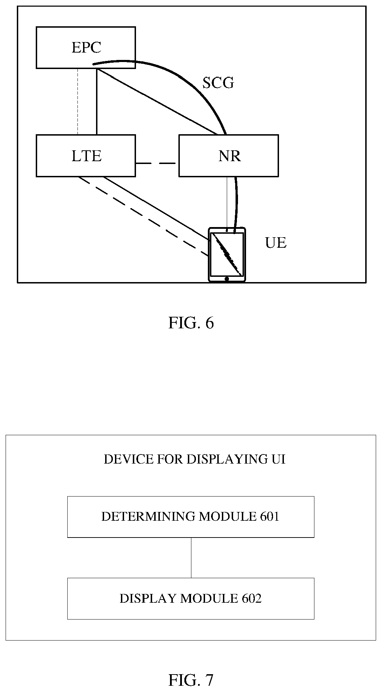

As illustrated in FIG. 6, the link between the first access network (e.g., an NR access network) and the core network as well as the link between the second access network (e.g., an LTE access network) and the core network are established respectively. The NR access network can perform data transmission and/or signaling transmission via the link between the NR access network and the core network, and the LTE access network can perform data transmission and/or signaling transmission via the link between the LTE access network and the core network. In some implementations, the signaling transmission between the first access network and the core network is performed through the second access network and the second link between the second access network and the core network. In this way, signaling of the first access network and the second access network can be aggregated and managed uniformly at the second access network, for access control coordination of the first access network and the second access network, for example, for wireless resource coordination, etc.

In FIG. 6, the first access network and the second access network provide access cells for a terminal device respectively. For example, the second access network provides a master cell group (MCG) for the terminal device, and the first access network provides a secondary cell group (SCG) for the terminal device. Then high-speed transmission or high-bandwidth transmission is achieved through split bearer.

As illustrated in FIG. 7, implementations of the disclosure provide a device for displaying a UI. The device includes a determining module 601 and a display module 602. The determining module 601 is configured to determine a first network coverage quality of a first access network and a second network coverage quality of a second access network. The display module 602 is configured to display, based on the first network coverage quality and the second network coverage quality, first prompt information for the first access network or second prompt information for the second access network on the UI. The device for displaying a UI can be applicable to a terminal device.

In some implementations, the determining module 601 and the display module 602 of the terminal device are program modules. The program modules, when executed by a processor, are configured to determine the first network coverage quality and the second network coverage quality, and display the first prompt information or the second prompt information.

In some implementations, the determining module 601 and the display module 602 can include hardware structures and programs for the structures. For example, the determining module 601 and the display module 602 may be a complex programmable logic device (CPLD) or a field programmable gate array (FPGA).

In other implementations, the determining module 601 and the display module 602 include only hardware modules, such as application specific integrated circuits.

Specific structures of the determining module 601 and the display module 602 may be various, and implementations are not limited to any of the foregoing structures.

In some implementations, the display module 602 is configured to perform at least one of: displaying the first prompt information on the UI on condition that a weighted average of the first network coverage quality and the second network coverage quality meets a first access standard; displaying the second prompt information on the UI on condition that the weighted average of the first network coverage quality and the second network coverage quality does not meet the first access standard.

In some implementations, the display module 602 is further configured to display the first prompt information on the UI, on condition that the weighted average of the first network coverage quality and the second network coverage quality meets the first access standard and the first network coverage quality meets a second access standard.

In some implementations, a quality threshold corresponding to the second access standard is less than a quality threshold corresponding to the first access standard.

In some implementations, the weighted average of the first network coverage quality and the second network coverage quality meets the first access standard as follows. The weighted average of the first network coverage quality and the second network coverage quality is greater than a quality threshold corresponding to the first access standard.

In some implementations, the device further includes a detecting module. The detecting module is configured to detect that a terminal device attaches the first access network and the second access network and establishes a connection with the first access network and the second access network. The determining module 601 is configured to determine the first network coverage quality and the second network coverage quality after the terminal device establishes the connection with the first access network and the second access network.

In some implementations, a first link is established between the first access network and a core network, and a second link is established between the second access network and the core network.

In some implementations, the first access network is a 5G access network, and the second access network is a 4G access network; or, the first access network is an NR access network, and the second access network is an LTE access network.

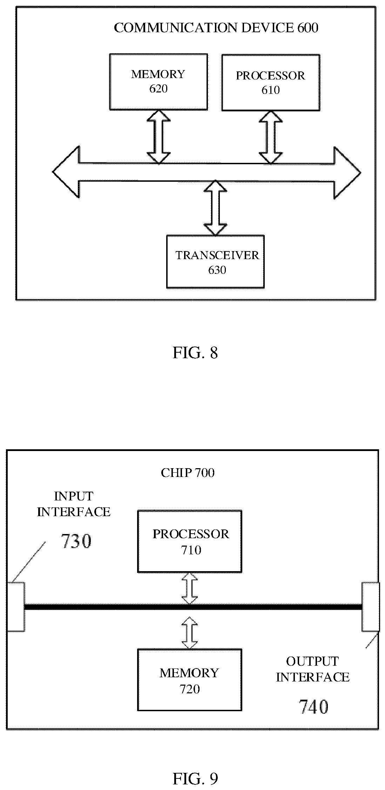

FIG. 8 is a schematic structural diagram illustrating a communication device 600 according to implementations. The communication device may be a terminal device. As illustrated in FIG. 8, the communication device 600 includes a processor 610. The processor 610 is configured to call and run a computer program from a memory to implement the method in the implementations of the disclosure.

In some implementations, as illustrated in FIG. 8, the communication device 600 further includes a memory 620. The processor 610 is configured to call and run a computer program from the memory 620 to implement the method in the implementations of the disclosure.

The memory 620 may be a device separate from the processor 610, or may be integrated with the processor 610.

In some implementations, as illustrated in FIG. 8, the communication device 600 further includes a transceiver 630. The processor 610 is configured to control the transceiver 630 to communicate with other devices, for example, to send information or data to other devices or receive information or data sent by other devices.

The transceiver 630 may include a transmitter and a receiver. The transceiver 630 may further include an antenna, where one or more antennas are included.

In some implementations, the communication device 600 is embodied as the network device of the implementations of the disclosure, and the communication device 600 can implement the operations implemented by the network device in the foregoing method of the implementations of the disclosure. For the sake of simplicity, details for the operations are not repeated herein.

In some implementations, the communication device 600 is embodied as the mobile terminal device/terminal device of the implementations of the disclosure, and the communication device 600 can implement the operations implemented by the mobile terminal device/terminal device in the foregoing method of the implementations of the disclosure. For the sake of simplicity, details for the operations are not repeated herein.

FIG. 9 is a schematic structural diagram illustrating a chip according to implementations. As illustrated in FIG. 9, a chip 700 includes a processor 710. The processor 710 is configured to call and run a computer program from a memory to implement the method in the implementations of the disclosure.

In some implementations, as illustrated in FIG. 9, the chip 700 further includes a memory 720. The processor 710 is configured to call and run a computer program from the memory 720 to implement the method in the implementations of the disclosure.

The memory 720 may be a device separate from the processor 710, or may be integrated with the processor 710.

In some implementations, the chip 700 further includes an input interface 730. The processor 710 is configured to control the input interface 730 to communicate with other devices or chips, for example, to obtain information or data sent by other devices or chips.

In some implementations, the chip 700 further includes an output interface 740. The processor 710 is configured to control the output interface 740 to communicate with other devices or chips, for example, to output information or data to other devices or chips.

In some implementations, the chip can be applicable to the network device in the implementations of the disclosure, and the chip can implement the operations implemented by the network device in the foregoing method of the implementations of the disclosure. For the sake of simplicity, details for the operations are not repeated herein.

In some implementations, the chip can be applicable to the mobile terminal device/terminal device in the implementations of the disclosure, and the chip can implement the operations implemented by the mobile terminal device/terminal device in the foregoing method of the implementations of the disclosure. For the sake of simplicity, details for the operations are not repeated herein.

The chip mentioned in the implementations of the disclosure may also be referred to as a system-level chip, a chip system, or a system-on chip.

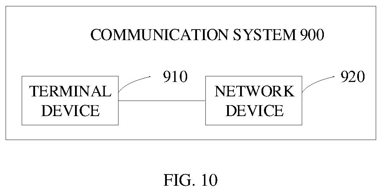

FIG. 10 is a schematic block diagram illustrating a communication system 900 according to implementations. As illustrated in FIG. 10, the communication system 900 includes a terminal device 910 and a network device 920.

The terminal device 910 is configured to implement the functions implemented by the terminal device in the foregoing method, and the network device 920 is configured to implement the functions implemented by the network device in the foregoing method. For the sake of simplicity, details for the operations are not repeated herein.

An illustrative example is provided below in conjunction with the foregoing implementations of the disclosure.

### First example

A connection manner of the disclosure is to realize eMBB functions of a 5G architecture, where NR and LTE are distribution paths of data. Since EPC is a 4G core network, the network configuration and indicators thereof cannot fully meet 5G requirements. However, with the evolution of LTE technologies and the improvement of EPC capabilities, some EPC indicators will satisfy or basically satisfy 5G technical indicators specified in the 3GPP.

In this process, UI display of access technologies on a UE should truly reflect a current network state and user scenarios.

Specifically, when the UE is powered on and has attached to an LTE base station and an NR base station, after successfully establishing a dual connectivity, based on coverage qualities under joint coverage of the NR base station and the LTE base station: if a network coverage quality under joint coverage of a 5G network and an LTE network meets a standard and a channel condition meets an access standard, such as (average of RSRPs) RSRP_average = (RSRP_NR+ RSRP_LTE)/2 > -100 dBm, prompt information for the 5G network is displayed; otherwise, prompt information for the 4G network is displayed. The method for displaying a UI can be used for a UI display rule when the terminal device is powered on.

The processor of the implementations of the disclosure may be an integrated circuit chip with signal processing capabilities. In an implementation process, the operations of the foregoing method implementations can be completed by a hardware integrated logic circuit of the processor or instructions in the form of software. The processor may be a general-purpose processor, a digital signal processor (DSP), an application specific integrated circuit (ASIC), a field programmable gate array (FPGA) or other programmable logic devices, discrete gates or transistor logic devices, discrete hardware components, and so on. The processor can implement or execute the method, operations, and block diagrams of the implementations of the disclosure. The general-purpose processor may be a microprocessor, or may also be any conventional processor or the like. The operations of the method of the implementations of the disclosure may be directly embodied as being executed and completed by a hardware decoding processor, or executed by a combination of hardware and a software module of the decoding processor. The software module may be located in a mature storage medium in the field such as a random access memory, a flash memory, a read-only memory, a programmable read-only memory, or electrically erasable programmable memory, a register. The storage medium may be located in a memory. The processor reads information from the memory and completes the operations of the foregoing method in combination with its hardware.

The memory in the implementations of the disclosure may be a transitory memory or a non-transitory memory, or may include the transitory memory and the non-transitory memory. The non-transitory memory may be a read-only memory (ROM), a programmable ROM (PROM), erasable PROM (EPROM), and electrically EPROM (EEPROM), or a flash memory. The transitory memory may be a random access memory (RAM), which is used as an external cache. Based on the above exemplary but not restrictive description, many forms of RAM are available, such as a static RAM (SRAM), a dynamic RAM (DRAM), and a synchronous DRAM (SDRAM), a double data rate SDRAM (DDR SDRAM), an enhanced SDRAM (ESDRAM), a synch link DRAM (SLDRAM), and a direct rambus RAM (DR RAM). The memory of the system and the method described herein is intended to include, but is not limited to, the above memories and any other suitable type of memory.

The foregoing examples of the memory are merely illustrative but not restrictive. For example, the memory in the implementations of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. That is, the memory in the implementations of the disclosure is intended to include, but is not limited to, the above memories and any other suitable type of memory.

In implementations of the disclosure, a computer-readable storage medium is further provided. The computer-readable storage medium is configured to store a computer program.

In some implementations, the computer-readable storage medium is applicable to the network device in the implementations of the disclosure. The computer program is operable with a computer to execute the operations implemented by the network device in the foregoing method of the implementations of the disclosure. For the sake of simplicity, details for the operations are not repeated herein.

In some implementations, the computer-readable storage medium is applicable to the mobile terminal device/terminal device in the implementations of the disclosure. The computer program is operable with a computer to execute the operations implemented by the mobile terminal device/terminal device in the foregoing method of the implementations of the disclosure. For the sake of simplicity, details for the operations are not repeated herein.

In implementations of the disclosure, a computer program product is further provided. The computer program product includes a computer program instruction.

In some implementations, the computer program product is applicable to the network device in the implementations of the disclosure. The computer program instruction is operable with a computer to execute the operations implemented by the network device in the foregoing method of the implementations of the disclosure. For the sake of simplicity, details for the operations are not repeated herein.

In some implementations, the computer program product is applicable to the mobile terminal device/terminal device in the implementations of the disclosure. The computer program instruction is operable with a computer to execute the operations implemented by the mobile terminal device/terminal device in the foregoing method of the implementations of the application. For the sake of simplicity, details for the operations are not repeated herein.

In implementations of the disclosure, a computer program is further provided.

In some implementations, the computer program can be applicable to the network device in the implementations of the disclosure. The computer program, when executed by a computer, is operable with the computer to execute the operations implemented by the network device in the foregoing method of the implementations of the disclosure. For the sake of simplicity, details for the operations are not repeated herein.

In some implementations, the computer program can be applicable to the mobile terminal device/terminal device in the implementations of the disclosure. The computer program, when executed by a computer, is operable with the computer to execute the operations implemented by the mobile terminal device/terminal device in the foregoing method in the implementations of the disclosure. For the sake of simplicity, details for the operations are not repeated herein.

Those skilled in the art should readily recognize that, in combination with the exemplary modules (or units) and algorithm steps described in the implementations disclosed herein, the disclosure can be implemented in hardware or a combination of hardware and computer software. Whether a function is implemented by way of hardware or software depends on the particular application and design constraints of the technical solution. Those skilled in the art may use different methods to implement the described functions for each particular application, but such implementation should not be considered as beyond the scope of the disclosure.

Those skilled in the art can clearly understand that, for the convenience and conciseness of description, the specific working process of the above-described system, device, and module can refer to the corresponding process in the foregoing method implementation, which is not repeated herein.

In the implementations of the disclosure, it should be understood that, the device disclosed in implementations provided herein may be implemented in other manners. For example, the device implementations described above are merely illustrative. For instance, the division of the modules is only a logical function division and there can be other manners of division during actual implementations, for example, multiple modules or assemblies may be combined or may be integrated into another system, or some features may be ignored, omitted, or not performed. In addition, coupling or communication connection between each illustrated or discussed component may be direct coupling or communication connection, or may be indirect coupling or communication among devices or modules via some interfaces, and may be electrical connection, mechanical connection, or other forms of connection.

The modules described as separate components may or may not be physically separated, the components illustrated as modules may or may not be physical units, that is, they may be in the same place or may be distributed to multiple network elements. All or part of the modules may be selected according to actual needs to achieve the technical solutions of the implementations.

In addition, the functional modules in various implementations of the disclosure may be integrated into one processing unit, or each module may be physically present, or two or more modules may be integrated into one module.

The functional module may be stored in a computer readable storage medium when it is implemented in the form of a software functional unit and is sold or used as a separate product. Based on such understanding, the technical solutions of the disclosure essentially, or the part of the technical solutions that contributes to the related art, or all or part of the technical solutions, may be embodied in the form of a software product which is stored in a storage medium and includes instructions for causing a computer device (which may be a personal computer, a server, or a network device and so on) to execute all or part of the operations of the method described in the various implementations of the disclosure. The storage medium includes various medium capable of storing program codes, such as a universal serial bus (USB), a ROM, a RAM, a magnetic disk, a compact disc (CD), or the like.

It should be noted that, the foregoing implementations are merely used to illustrate the technical solutions of the disclosure rather than limiting the disclosure. Any modifications, equivalent substitutions, or improvements that can be easily thought of by those skilled in the art without departing from the spirits and principles of the disclosure shall all be encompassed within the protection of the disclosure. Therefore, the protection of the disclosure depends on the protection of the claims.

The foregoing implementations are merely illustrative examples, and it is to be understood that the disclosure is not to be limited to the disclosed implementations. As will occur to those skilled in the art, any modifications or equivalent substitutions made thereto without departing from the spirits and principles of the disclosure shall all be encompassed within the protection of the disclosure. Therefore, the scope of the disclosure should be determined by the scope of the claims.

## Claims

1. A method for displaying a user interface, UI, comprising:
determining a first network coverage quality of a first access network and a second network coverage quality of a second access network; and
displaying, based on the first network coverage quality and the second network coverage quality, first prompt information for the first access network or second prompt information for the second access network on the UI.

2. The method of claim 1, wherein displaying, based on the first network coverage quality and the second network coverage quality, the first prompt information for the first access network or the second prompt information for the second access network on the UI comprises at least one of:
displaying the first prompt information on the UI on condition that a weighted average of the first network coverage quality and the second network coverage quality meets a first access standard; and
displaying the second prompt information on the UI on condition that the weighted average of the first network coverage quality and the second network coverage quality does not meet the first access standard.

3. The method of claim 2, wherein displaying the first prompt information on the UI on condition that the weighted average of the first network coverage quality and the second network coverage quality meets the first access standard comprises:
displaying the first prompt information on the UI, on condition that the weighted average of the first network coverage quality and the second network coverage quality meets the first access standard and the first network coverage quality meets a second access standard.

4. The method of claim 3, wherein a quality threshold corresponding to the second access standard is less than a quality threshold corresponding to the first access standard.

5. The method of claim 1, wherein the weighted average of the first network coverage quality and the second network coverage quality meets the first access standard as follows:
the weighted average of the first network coverage quality and the second network coverage quality is greater than a quality threshold corresponding to the first access standard.

6. The method of any of claims 1 to 4, further comprising:
detecting that a terminal device attaches the first access network and the second access network and establishes a connection with the first access network and the second access network; and
determining the first network coverage quality of the first access network and the second network coverage quality of the second access network comprising:
determining the first network coverage quality and the second network coverage quality after the terminal device establishes the connection with the first access network and the second access network.

7. The method of any of claims 1 to 4, wherein
a first link is established between the first access network and a core network; and
a second link is established between the second access network and the core network.

8. The method of any of claims 1 to 4, wherein
the first access network is a fifth generation, 5G, access network, and the second access network is a fourth generation, 4G, access network; or
the first access network is a new radio, NR, access network, and the second access network is a long term evolution, LTE, access network.

9. A device for displaying a user interface, UI, comprising:
a determining module, configured to determine a first network coverage quality of a first access network and a second network coverage quality of a second access network; and
a display module, configured to display, based on the first network coverage quality and the second network coverage quality, first prompt information for the first access network or second prompt information for the second access network on the UI.

10. The device of claim 9, wherein the display module is configured to perform at least one of:
displaying the first prompt information on the UI on condition that a weighted average of the first network coverage quality and the second network coverage quality meets a first access standard; and
displaying the second prompt information on the UI on condition that the weighted average of the first network coverage quality and the second network coverage quality does not meet the first access standard.

11. The device of claim 10, wherein the display module is configured to display the first prompt information on the UI, on condition that the weighted average of the first network coverage quality and the second network coverage quality meets the first access standard and the first network coverage quality meets a second access standard.

12. The device of claim 11, wherein a quality threshold corresponding to the second access standard is less than a quality threshold corresponding to the first access standard.

13. The device of claim 9, wherein the weighted average of the first network coverage quality and the second network coverage quality meets the first access standard as follows:
the weighted average of the first network coverage quality and the second network coverage quality is greater than a quality threshold corresponding to the first access standard.

14. The device of any of claims 9 to 13, further comprising:
a detecting module, configured to detect that a terminal device attaches the first access network and the second access network and establishes a connection with the first access network and the second access network; and
the determining module being configured to determine the first network coverage quality and the second network coverage quality after the terminal device establishes the connection with the first access network and the second access network.

15. The device of any of claims 9 to 13, wherein
a first link is established between the first access network and a core network; and
a second link is established between the second access network and the core network.

16. The device of any of claims 9 to 13, wherein
the first access network is a fifth generation, 5G, access network, and the second access network is a fourth generation, 4G, access network; or
the first access network is a new radio, NR, access network, and the second access network is a long term evolution, LTE, access network.

17. A terminal device, comprising:
a memory, storing a computer program; and
a processor, configured to call and run the computer program stored in the memory and configured to execute the method of any of claims 1 to 8.

18. A chip, comprising a processor configured to call and run a computer program from a memory, the computer program is operable with a device equipped with the chip to execute the method of any of claims 1 to 8.

19. A computer-readable storage medium, storing a computer program which is operable with a computer to execute the method of any of claims 1 to 8.

20. A computer program product, comprising a computer program instruction which is operable with a computer to execute the method of any of claims 1 to 8.

21. A computer program being operable with a computer to execute the method of any of claims 1 to 8.
